Europäisches Patentamt

European Patent Office

Office européen des brevets

(19)

(11) Publication number: **0 116 763**
**B1**

(12) **EUROPEAN PATENT SPECIFICATION**

(45) Date of publication of patent specification: **29.06.88**

(51) Int. Cl.⁴: **B 60 K 17/10**

(21) Application number: **83307575.7**

(22) Date of filing: **13.12.83**

(54) **Hydrostatic transaxle assembly.**

(30) Priority: **06.01.83 US 456153**

(43) Date of publication of application:
**29.08.84 Bulletin 84/35**

(45) Publication of the grant of the patent:
**29.06.88 Bulletin 88/26**

(84) Designated Contracting States:
**DE FR GB IT**

(56) References cited:
**DE-A-2 453 667**
**FR-A-1 133 570**
**FR-A-1 447 767**
**GB-A-1 012 299**
**US-A-2 791 284**
**US-A-3 572 983**

(73) Proprietor: **EATON CORPORATION**
**100 Erieview Plaza**
**Cleveland Ohio 44114 (US)**

(72) Inventor: **Korrect, Jerold Mark**
**18401 Hanus Road**
**Minnetonka Minnesota 55343 (US)**

(74) Representative: **Douglas, John Andrew**
**Eaton House Staines Road**
**Hounslow Middlesex TW4 5DX (GB)**

## Description

Background of the disclosure

The present inventoin relates to hydrostatic transaxle assemblies, and more particulariy, to such an assembly having built-in hydraulic gear reduction.

Certain vehicles, such as lawn and garden tractors, and smaller farm tractors, have used hydrostatic transaxle assemblies for transmitting engine torque to a pair of ground-engaging drive wheels, to propel the vehicle. A typical transaxle assembly includes a variable displacement hydraulic pump, such that the ratio of pump output flow to pump input speed (engine speed) can be infinitely varied by the vehicle operator. This ability to infinitely vary the output-input ratio, without interruption of torque transmission, makes transaxle assemblies greatly preferred over conventional clutch and gear transmissions, for vehicles of the type described above.

It will be understood by those skilled in the art that a primary requirement of a transaxle assembly is its "gear reduction" capability, i.e., the ratio of engine speed to vehicle wheel speed for any given displacement of the variable pump.

In the prior art, there have been two primary types of arrangements for obtaining the necessary gear reduction between the engine and the wheels. One approach involved the use of a light duty hydrostatic transmission, comprising a variable displacement pump hydraulically coupled to a fixed displacement motor to drive a single output shaft, arranged coaxially with the pump input shaft. The motor output shaft would engage the input of a transaxle assembly including a spur and/ or beveled gear reduction unit, and an axle arrangement including some sort of device to permit differential action between the left and right axles. Although the performance of this type of transaxle assembly has been generally satisfactory, the excessive size, weight, and cost make this type of transaxle commercially less desirable. In addition, the excessive size makes the overall layout of the vehicle difficult, especially with regard to the operator's seat and the inclusion of a power take-off (PTO) capability.

In another type of prior art vehicle propel system, a variable displacement pump provides pressurized fluid to a pair of wheel motors, connected in parallel. The wheel motors directly drive the vehicle wheels, and are of the low speed-high torque variety, thus inherently providing the necessary gear reduction. Typically, these motors are of the orbiting gerotor type, such that the gear reduction will be on the order of 25:1 or 30:1. However, in this type of propel system, it is necessary to provide hose connections from the pump to each of the motors, and the presence of exposed hydraulic hoses is considered undesirable on most vehicles of this type. In addition, the use of separate wheel motors means that the vehicle has no true axle assembly to which the vehicle frame can be mounted, or which can provide hitch points for vehicle implements.

Another prior art system, that of FR—A—1 447 767, discloses the pre-characterizing portion of Claim 1. It features an axial piston pump and axial piston motor, which can provide high speed but only low torque operation. High torque could only be achieved with enormous components, of prohibitive weight for lawnmowers etc.

Summary of the invention

Accordingly, it is an object of the present invention to provide a hydrostatic transaxle assembly which is substantially smaller, lighter, and less expensive than transaxles of the type utilizing spur and/or beveled gear reduction units, yet which provides acceptable torque outputs.

It is another object of the present invention to provide a transaxle assembly of the type which eliminates the need for exposed hydraulic hoses, and which facilitates mounting of the vehicle frame and vehicle accessories to the transaxle assembly.

The above and other objects of the present invention are accomplished by the provision of Claim 1.

In accordance with one embodiment of the present invention, the displacement mechanism comprises an internally toothed member and an externally toothed member eccentrically disposed in the internally toothed member for relative orbital and rotational movement therein, and the internally toothed member comprises a portion of the stationary axle housing means. In accordance with another embodiment of the present invention, the means for transmitting rotary output of the displacement mechanism to the axle shaft comprises a drive shaft which cooperates with the externally toothed member to define a first universal connection and cooperates with the axle shaft to define a second universal connection. In accordance with another embodiment of the present invention, the valve means comprises a rotatable disc valve member cooperating with the manifold housing means to define an inlet fluid chamber and a return fluid chamber, each of the inlet fluid chambers being in open, relatively unrestricted fluid communication with the inlet passage means of the manifold housing means, and each of the return fluid chambers being in open, relatively unrestricted fluid communication with the outlet port of the manifold housing means.

Brief description of the drawings

Fig. 1 is a rear plan view of a vehicle such as a garden tractor equipped with the hydrostatic transaxle assembly of the present invention.

Fig. 2 is an end view of the transaxle assembly of the present invention on a larger scale than Fig. 1, comparing its profile to the profile of a prior art transaxle assembly of the type including spur gear reduction.

Fig. 3 is a horizontal, axial cross section of the variable displacement pump associated with the transaxle assembly of the present invention.

Fig. 4 is a horizontal axial cross section, on the same scale as Fig. 3, showing the central portion of the transaxle assembly of the present invention.

Fig. 5 is a horizontal, axial cross section, which is axially foreshortened, and on the same scale as Figs. 3 and 4, showing one of the axle assemblies of the invention.

Description of the preferred embodiment

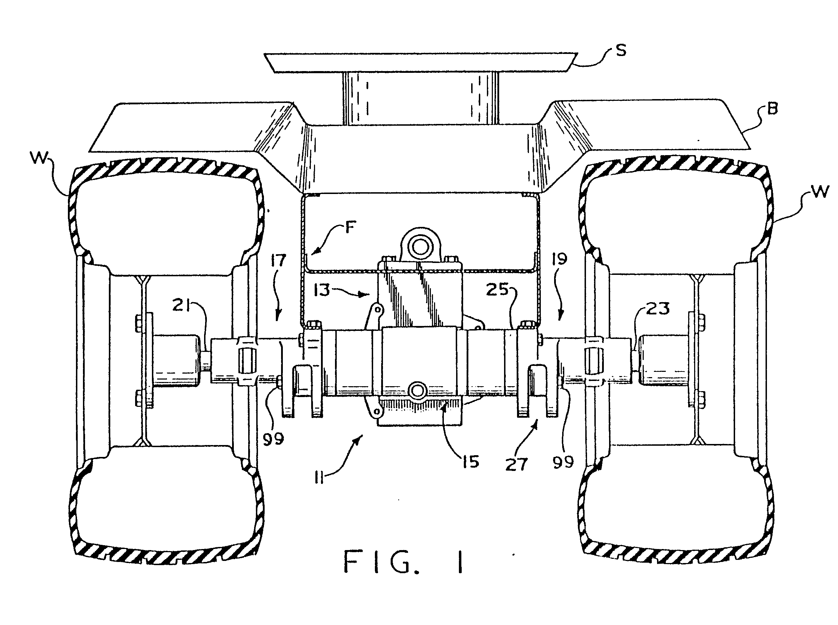

Referring now to the drawings, which are not intended to limit the invention, Fig. 1 is a rear plan view showing the transaxle assembly of the present invention, generally designated 11 installed on a typical garden tractor. The tractor includes a vehicle frame F which supports a stamped body and fender assembly B. Disposed above the body assembly B is a seat S for the vehicle operator. The tractor also includes a pair of ground-engaging wheels W which are adapted to be driven by the transaxle assembly of the present invention.

The transaxle assembly 11 includes a variable displacement hydraulic pump, generally designated 13, a central manifold portion, generally designated 15, and left and right axle assemblies, generally designated 17 and 19, respectively. Extending out of the axle assembly 17 is a left axle shaft 21, and extending out of the axle assembly 19 is a right axle shaft 23.

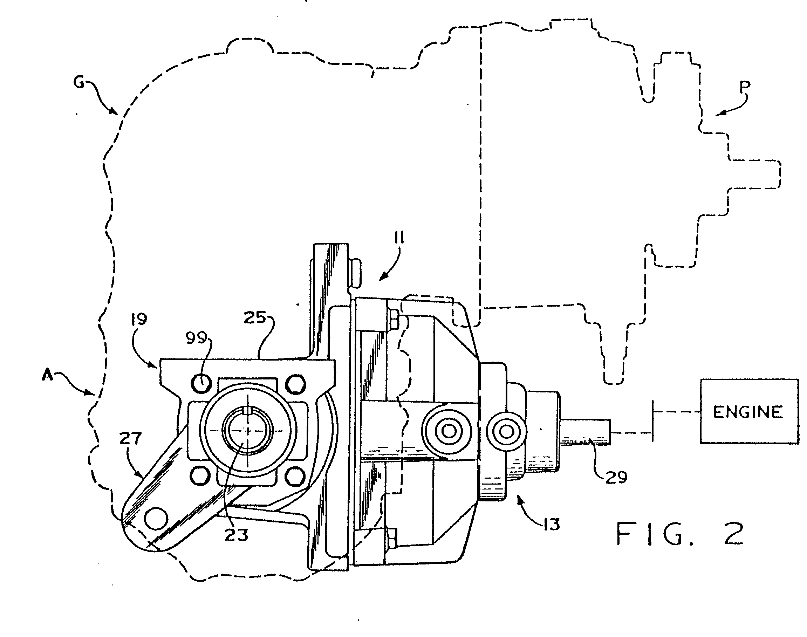

Referring now to Fig. 2 which is an end view of the transaxle assembly 11 alone, in conjunction with Fig. 1, it may be seen that each of the axle assemblies 17 and 19 includes a mounting pad 25, to which is attached a portion of the vehicle frame F. In addition, each of the axle assemblies 17 and 19 includes an integral hitch mounting point 27, to permit attachment of a tractor implement lift arms to the transaxle assembly 11. Also shown schematically in Fig. 2 is the vehicle engine, with a schematic representation of the engine output being transmitted to an input shaft 29 of the hydraulic pulp 13.

Referring now only to Fig. 2, there is shown a comparison of the profile of the transaxle assembly 11 and the profile of the prior art transaxle device (dotted line). The prior art transaxle is positioned in Fig. 2, relative to the transaxle assembly 11, such that the axis of rotation of the axle shafts of the two assemblies coincide. The prior art transaxle device shown in Fig. 2 comprises a hydraulic pump P (which may be substantially identical to the pump 13, but is rotated at a 90 degree angle relative to the pump 13, for reasons which are not relevant to the present invention). The prior art transaxle device also includes a gear reduction unit G, which is typically of the spur and bevel gear type as described in the background. Mounted below the gear reduction unit G is the axle assembly A. A gear reduction unit G and axle assembly A, having the profile shown in Fig. 2, are produced commercially by Peerless, and are well known in the art.

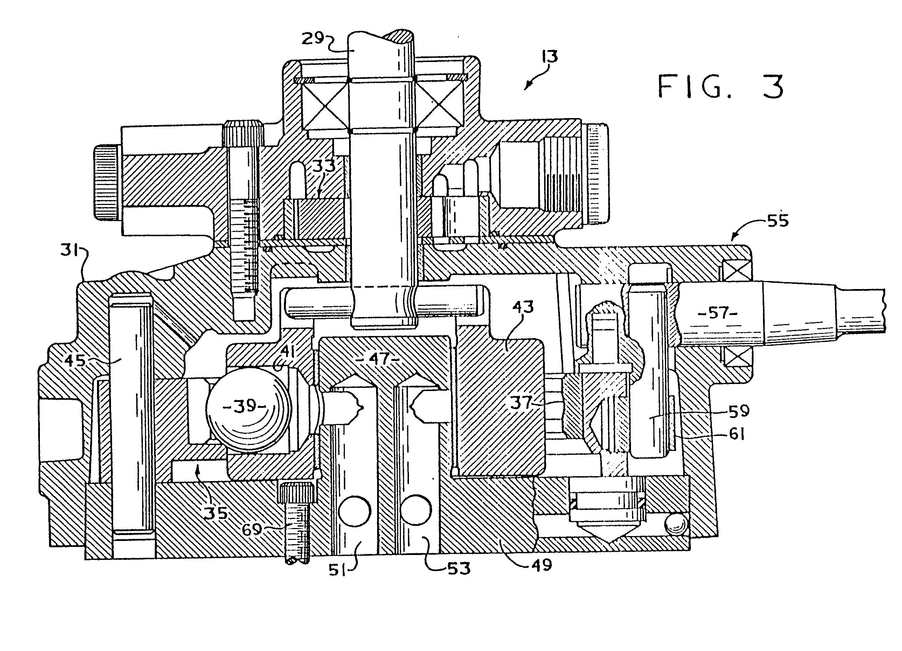

Referring now to Fig. 3, the hydraulic pump 13 will be described briefly. It should be understood that the pump 13 may comprise any one of several well known pump configurations, and that the structural details of the pump 13 form no part of the present invention. In the subject embodiment, the pump 13 is a variable displacement, radial ball (piston) pump, which is essentially just the pump portion of a Model 11 hydrostatic transmission sold by Eaton Corporation.

The pump 13 includes a housing assembly 31 enclosing a make-up pumping element 33. The input shaft 29 simultaneously rotates components of the make-up pump 23, and of the radial ball pumping element. The ball pump includes a movable cam ring assembly 35 having a circular concave race 37 which mates with a plurality of pump balls 39 which are located in bores 41 of an annular pump rotor 43. Cam ring assembly 35 is free to pivot about the axis of a cam pivot pin 45 to vary the eccentricity of the race 37 relative to the longitudinal axis of the pump (which coincides with the axis of the input shaft 29). Rotation of the pump rotor 43 about a boss 47 of a pintle assembly 49 moves the balls 39 radially inwardly in bores 41, causing fluid to be forced by the balls 39 through an outlet passage 51. At the same time, return fluid flows through pump inlet passage 53 and fills the bores 41 as the balls 39 move radially outwardly in contact with the race 37.

An appropriate control arrangement, generally designated 55 to vary the displacement of the pump 13 is provided. The control arrangement 55 includes a control shaft 57, a control pin 59, and a cam ring insert 61. The specific purpose of the control arrangement 55 is to pivot the cam ring assembly 35 about the cam pivot pin 45. Such pivotal movement is accomplished by rotating control shaft 57 about ihs axis, which turns control pin 59, and accordingly moves cam ring insert 61 and cam ring 35. Pivotal movement of cam ring 35 allows the pump 13 to vary from full displacement in one direction to zero displacement to full displacement in the other direction.

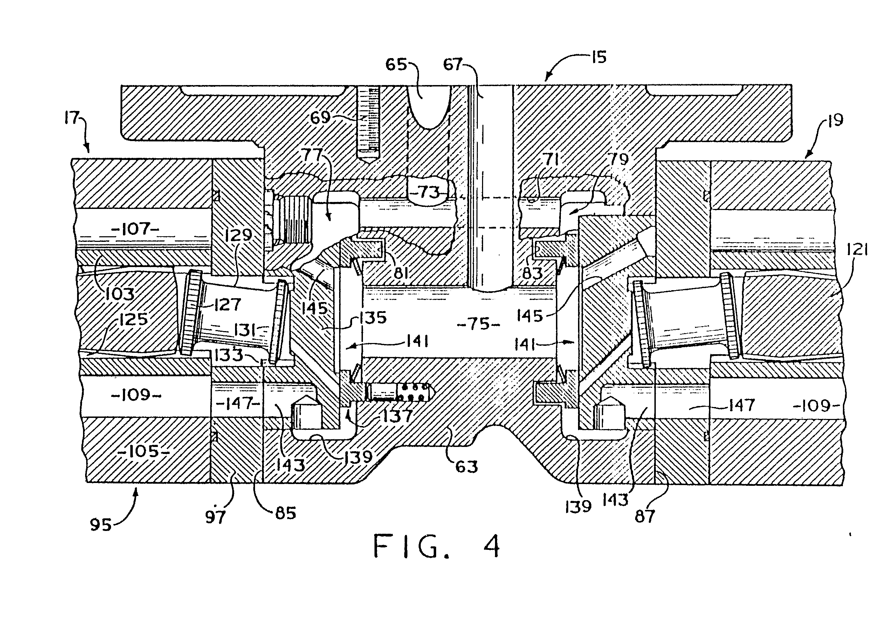

Referring now to Fig. 4, the manifold portion 15 will be described in structural detail. The manifold portion 15 includes a manifold housing 63 which defines an inlet port 65 and an outlet port 67. The manifold housing 63 is adapted to be fixedly and sealingly attached to the pump 13, and more specifically, to the pintle assembly 49 by means of a plurality of bolts 69, part of which is shown both in Fig. 3 and in Fig. 4. By aligning the pump 13 with the manifold portion 15, it may be seen that the outlet passage 51 is in fluid communication with the manifold inlet port 65, while the manifold outlet port 67 is in fluid communication with the pump inlet passage 53.

The manifold housing 63 defines an axially-oriented passage 71, and a passage 73 interconnecting the inlet port 65 and the axial passage 71. The manifold housing 63 further defines a large central chamber 75 which is in open, relatively unrestricted fluid communication with the outlet port 67.

The manifold housing 63 further defines left and right generally cylindrical recesses 77 and 79. The recesses 77 and 79 are preferably arranged to be oppositely and symmetrically disposed. The manifold housing 63 also defines left and right annular grooves 81 and 83, the function of which will be described subsequently. Finally, the manifold housing 63 defines left and right end faces 85 and 87, the function of which will also be described subsequently.

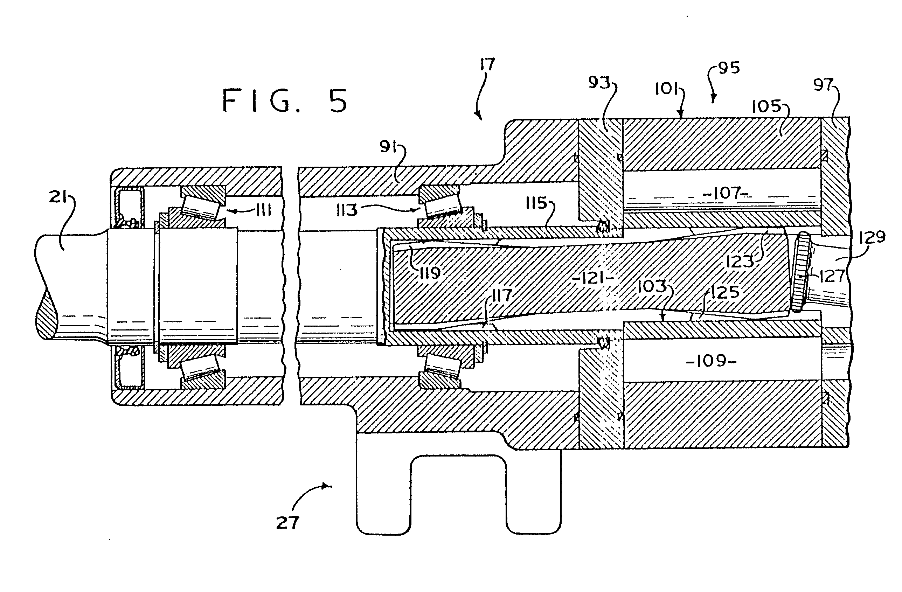

Referring now to Fig. 5, in conjunction with Fig. 4, the left axle assembly 17 will be described in structural detail, it being understood that the right axle assembly 19 is a mirror image of the left axle assembly 17. Thus, only the left axle assembly 17 will be described.

The left axle assembly 17 comprises a plurality of sections including an axle support casing 91, a wear plate 93, a gerotor displacement mechanism 95, and a port plate 97. These elements 91, 93, 95, and 97 are secured together, and held in fixed sealing engagement with the left end face 85 of the manifold housing 63 by some suitable means, such as a plurality of bolts 99 (shown only in Figs. 1 and 2). Thus, the end face 85 and recess 77 serve as a receiving (or mounting portion) for the axle assembly 17.

The gerotor displacement mechanism 95 is well known to those skilled in the art, and will be described only briefly herein. In the subject embodiment, the gerotor mechanism 95 is a Geroler® mechanism comprising an internally toothed assembly 101, and an externally toothed rotor member 103, eccentrically disposed within the internally toothed assembly 101. The assembly 101 includes a stationary ring member 105 defining a plurality of semi-cylindrical openings, with a cylindrical roller member 107 disposed in each of the openings. Typically, the rotor 103 has one less tooth than the number of rollers 107, thus permitting the rotor 103 to orbit and rotate relative to the internally toothed assembly 101. This orbital and rotational movement of the rotor 103 defines a plurality of expanding and contracting volume chambers 109.

Referring now primarily to Fig. 5, the left axle shaft 21 is positioned within the axle support casing 91, and rotatably supported therein by suitable bearing sets 111 and 113. Toward its right end in Fig. 5, the axle shaft 21 defines a generally cylindrical portion 115 within which is a set of internal, straight splines 117. In engagement with the splines 117 is a set of external, crowned splines 119 formed on one end of a main drive shaft 121. Disposed at the opposite end of the shaft 121 is another set of external, crowned splines 123, which are in engagement with a set of internal, straight splines 125, formed on the inside of the rotor member 103. Therefore, in the subject embodiment, because the internally toothed assembly 101 includes seven internal teeth, and the rotor 103 includes six external teeth, seven orbits of the rotor 103 results in one complete rotation thereof, and one complete rotation of the drive shaft 121 and axle shaft 21.

Also in engagement with the internal splines 125 is a set of external splines 127 formed about one end of a valve drive shaft 129 which has, at its opposite end, another set of external splines 131. The splines 131 are in engagement with a set of internal splines 133 formed about the inner periphery of a valve member 135. The valve member 135 is rotatably disposed within the cylindrical recess 77 defined by the manifold housing 63, and by means of the valve drive shaft 129, the valve member 135 rotates at the speed of rotation of the rotor 103, as is generally well known in the art.

Disposed in sealing engagement with the right end face of the valve member 135 is a balancing ring assembly 137, which is shown and described in greater detail in US—A—3,572,983, assigned to the assignee of the present invention, and incorporated herein by reference. The valve member 135 and balancing ring assembly 137 cooperate to divide the cylindrical recess 77 into an annular outer chamber 139 and an annular inner chamber 141. The outer chamber 139 surrounds the valve member 135 and is in constant fluid communication with the manifold inlet port 65, through the passage 71. At the same time, the inner chamber 141 is in constant fluid communication with the manifold outlet port 67 through the central chamber 75.

The valve member 135 defines a plurality of alternating valve passages 143 and 145, the passages 143 being in communication with the outer chamber 139, while the valve passages 145 are in communication with the inner chamber 141. The port plate 97 defines a plurality of fluid passages 147, each of which is disposed to be in continuous fluid communication with an adjacent one of the volume chambers 109. Based upon the knowledge of those skilled in the art, and the incorporation of US—A—3,572,983, the structural details relating to the valve passages 143 and 145 and the fluid passages 147 will not be described further herein.

Operation

When the vehicle operator rotates the control shaft 57, to move the pump 13 from its zero displacement condition, pressurized fluid begins to flow from the outlet passage 51 of the pump, through the inlet port 65 and passage 73 into the axial passage 71. When the vehicle is moving in a straight path, and the resistance to turning of each of the axle shafts 21 and 23 is substantially equal, pressurized fluid entering the axial passage 71 will flow in substantially equal proportions to the outer chambers 139 of the left and right axle assemblies 17 and 19.

Pressurized fluid in the outer chambers 139 flows through valve passages 143 and port plate passages 147 into the expanding volume chambers 109, thus causing each of the rotors 103 to orbit and rotate at the same speed. As was described previously, the orbital and rotational movement of the rotors 103 is translated by the drive shafts 121 into pure rotational movement of the axle shafts 21 and 23.

At the same time, low pressure fluid is exhausted from the contracting volume chambers 109 flows through the adjacent port plate passages 147, and by means of the valve passages 145 flows through the annular inner chambers 141 into the central chamber 75. As described previously, low pressure return fluid in the chamber 75 flows to the outlet port 67, and then into the pump inlet passage 53.

When the vehicle is in a turn condition, the transaxle assembly 11 of the present invention has built-in differentiation capability. For example, if the vehicle is making a right turn, the axle shaft 23 will be rotating at a slower speed than the axle shaft 21. Because the tires, and thus the motors, turn at different speeds and are "tied" to the ground, the motors act as a flow divider. As a result, the flow of pressurized fluid from the pump 13 into the axial passage 71 will not be divided evenly, as was the case during straight movement, but instead, relatively less fluid will flow to the right axle assembly 19, and relatively more fluid will flow to the left axle assembly 17. In general, the flow of pressurized fluid to the axle assemblies 17 and 19 will be proportional to the speed thereof, and inversely proportional to the torque being transmitted. Thus, the transaxle assembly of the present invention includes a single, rigid axle housing which is suitable for mounting of the vehicle frame and various vehicle accessories and implements. At the same time, the invention provides a transaxle assembly having inherent, built-in differential capability and gear reduction capability.

In certain vehicles aplications, it may be desirable to separate the pump 13 from the manifold portion 15 and axle assembles 17 and 19. In such situations, it should be apparent to those skilled in the art that the pump 13 may be located remotely with appropriate porting and hoses to connect passage 51 to port 65 and passage 53 to port 67. It should be noted that with the pump being located remotely, the transaxle assembly of the invention still retains the features and advantages described above.

## Claims

1. A hydrostatic transaxle assembly (11) for use with a hydrostatic pump (13) on a vehicle having a vehicle frame (F), a source of motive power, and a pair of driven wheels (W), the pump having a fluid outlet (51) and a fluid inlet (53), said transaxle assembly comprising:

(a) manifold housing means (63) defining an inlet port (65) adapted to be in fluid communication with the pump fluid outlet and an outlet port (67) adapted to be in fluid communication with the pump fluid inlet, said manifold housing means defining a pair of oppositely disposed, generally symmetrical axle assembly receiving portions (85, 87) defining an axis of rotation, said manifold housing means further defining inlet passage means (71) in fluid communication with said inlet port and return passage means (75) in fluid communication with said outlet port;

(b) a pair of axle assemblies (17, 19) received in said axle assembly receiving portions of said manifold housing means;

(c) each of said axle assemblies comprising stationary axle housing means (91) fixedly mounted relative to said manifold housing means, an axle shaft (21, 23) disposed within said axle housing means and mounted for rotation relative thereto, a fluid pressure actuated rotary displacement mechanism (95), means (121) for transmitting the rotary output of said displacement mechanism to said axle shaft, said displacement mechanism defining expanding and contracting fluid chambers (109), and valve means (135) operable to provide fluid communication between said inlet passage means and said expanding fluid chamber and between said contracting fluid chamber and said return passage means; and characterized in that

(d) said displacement mechanism comprises an internally-toothed member (105) and an externally-toothed member (103) eccentrically disposed in said internally-toothed member for relative orbital and rotational movement therein, and having fewer teeth than said internally-toothed member (105), said displacement mechanism being operable to provide a low-speed, high-torque rotary output, said means (121) for transmitting said rotary output being operable to transmit said low-speed, high-torque rotary output to said axle shaft.

2. A transaxle assembly as claimed in claim 1 characterized in that said internally toothed member (105) comprises a portion of said stationary axle housing means (91).

3. A transaxle assembly as claimed in claim 1 characterized by said internally-toothed member (105) being mounted to be prevented from rotating relative to said stationary axle housing means (91), and said externally-toothed member (103) having relative orbital and rotational movement therein.

4. A transaxle assembly as claimed in claim 3 characterized by said means (121) for transmitting rotary output comprising drive shaft means cooperating with said externally-toothed member to define first universal connection means (123, 125), and cooperating with said axle shaft (21 or 23) to define second universal connection means (117, 119), to translate said orbital and rotational movement of said externally-toothed member into rotational movement of said axle shaft.

5. A transaxle assembly as claimed in any of claims 1—4 characterized by said displacement mechanism comprising a gerotor gear set, said internally-toothed member comprising a gerotor ring (105) having a plurality N+1 of internal teeth (107) and said externally-toothed member comprising a gerotor star (103) having a plurality N of external teeth.

6. An transaxle assembly as claimed in any of claims 1—5 characterized by each of said stationary axle housing means including mounting means (25) adapted to rigidly mount said axle housing means to the vehicle frame.

7. A transaxle assembly as claimed in claim 6 characterized by said externally-toothed member (103) defining a first set of straight, internal splines (125) and said drive shaft means (121) defining a first set of crowned, external splines (123), said first sets of splines comprising said first universal connection means.

8. A transaxle assembly as claimed in claim 7 characterized by said axle shaft (21 or 23) defining a second set of straight, internal splines (117), and said drive shaft means (121) defining a second set of crowned, external splines (119), said second set of splines comprising said second universal connection means.

9. A transaxle assembly as claimed in claim 1 characterized by said valve means comprising a rotatable disk valve (135) cooperating with said manifold housing means to define an inlet fluid chamber (139) and a return fluid chamber (141), each of said inlet fluid chambers being in open, relatively unrestricted fluid communication with said inlet port (65) of said manifold housing means (63), and each of said return fluid chambers being in open, relatively unrestricted fluid communication with said outlet port (67) of said manifold housing means.

10. A transaxle assembly as claimed in claim 9 characterized by said axle housing means defining a fluid passage (147) communicating with each of said expanding and contracting fluid volume chambers (109), and said rotary disk valve member (135) providing sequential fluid communication between said inlet fluid chamber (139) and each of said fluid passages, and between each of said fluid passages (147) and said return fluid chamber (141).

11. A transaxle assembly as claimed in claim 10 characterized by valve drive shaft means (129) operable to translate a rotational component of movement of said displacement mechanism into rotational movement of said rotary disk valve member (135) about said axis of rotation.

**Patentansprüche**

1. Hydrostatische Transaxle-Vorrichtung (11) zur Verwendung mit einer hydrostatischen Pumpe (13) an einem Fahrzeug mit einem Fahrzeugrahmen (F), einer Antriebskraftquelle und zwei angetriebenen Rädern (W), wobei die Pumpe mit einem Fluidausluß (51) und einem Fluideinlaß (53) versehen ist und die Transaxle-Vorrichtung aufweist:

(a) eine Verteilergehäuseanordnung (63), die einen mit dem Fluidauslaß der Pumpe in Fluidverbindung bringbaren Einlaß (65) und einem mit dem Fluideinlaß der Pumpe in Fluidverbindung bringbaren Auslaß (67), ferner entgegengesetzt angeordnete, im wesentlichen symmetrische und eine Drehachse bestimmende Achsvorrichtungs-Aufnahmeteile (85, 87) sowie eine mit dem Einlaß in Fluidverbindung stehende Einlaßkanalanordnung (71) und eine mit dem Auslaß in Fluidverbindung stehende Rückführungskanalanordnung (75) bildet;

(b) zwei in den Achsvorrichtungs-Aufnahmeteilen der Verteilergehäuseanordnung aufgenommene Achsvorrichtungen (17, 19);

(c) wobei jede der Achsvorrichtungen versehen ist mit einer mit Bezug auf die Verteilergehäuseanordnung fest montierten stationären Achsgehäuseanordnung (91), einer innerhalb der Achsgehäuseanordnung untergebrachten und gegenüber dieser drehbar gelagerten Achswelle (21, 23), einem fluiddruckbetätigten Rotationsverdrängermechanismus (95), einer Anordnung (121) zum Übertragen der Rotationsausgangsenergie des Verdrängermechanismus auf die Achswelle, wobei der Verdrängermechanismus sich vergrößernde und verkleinernde Fluidkammern (109) bildet, sowie mit einer Ventilanordnung (135) mittels deren eine Fluidverbindung zwischen der Einlaßkanalanordnung und der sich vergrößernden Fluidkammer sowie zwischen der sich verkleinernden Fluidkammer und der Rückführungskanalanordnung hergestellt werden kann; dadurch gekennzeichnet, daß

(d) der Verdrängermechanismus ein innenverzahntes Bauteil (105) und ein außenverzahntes Bauteil (103) aufweist, das in dem innenverzahnten Bauteil exzentrisch angeordnet ist und gegenüber diesem eine Umlaufbewegung und eine Drehbewegung ausführen kann und das weniger Zähne als das innenverzahnte Bauteil (105) aufweist, wobei der Verdrängermechanismus betätigbar ist, um für eine Rotationsausgangsenergie mit niedriger Drehzahl und hohem Drehmoment zu sorgen, und wobei die Anordnung (121) zum Übertragen der Rotationsausgangsenergie betätigbar ist, um die Rotationsausgangsenergie mit niedriger Drehzahl und hohem Drehmoment auf die Achswelle zu übertragen.

2. Transaxle-Vorrichtung nach Anspruch 1, dadurch gekennzeichnet, daß das innenverzahnte Bauteil (105) einen Teil der stationären Achsgehäuseanordnung (91) bildet.

3. Transaxle-Vorrichtung nach Anspruch 1, dadurch gekennzeichnet, daß das innenverzahnte Bauteil (105) derart montiert ist, daß es an einer Drehbewegung gegenüber der stationären Achsgehäuseanordnung (91) gehindert wird, und daß das außenverzahnte Bauteil (103) in dem innenverzahnten Bauteil gegenüber letzterem sowohl eine Umlaufbewegung als auch eine Drehbewegung ausführt.

4. Transaxle-Vorrichtung nach Anspruch 3, dadurch gekennzeichnet, daß die Anordnung (121) zum Übertragen von Rotationsausgangsenergie eine Antriebswellenanordnung aufweist, die zusammen mit dem außenverzahnten Bauteil eine erste Universalgelenkverbindung (123, 125) und zusammen mit der Achswelle (21 oder 23) eine zweite Universalgelenkverbindung (117, 119) bildet, um die Umlauf- und Drehbewegung des außen verzahnten Bauteils in eine Drehbewegung der Achswelle umzusetzen.

5. Transaxle-Vorrichtung nach einem der Ansprüche 1 bis 4, dadurch gekennzeichnet, daß der Verdrängermechanis mit einem Gerotor-Radsatz versehen ist, wobei das innenverzahnte Bauteil einen Gerotorring (105) mit einer Mehrzahl N+1 von Innenzähnen (107) und das außenverzahnte Bauteil einen Gerotorstern (103) mit einer Mehrzahl N von Außenzähnen aufweist.

6. Transaxle-Vorrichtung nach einem der Ansprüche 1 bis 5, dadurch gekennzeichnet, daß jede der stationären Achsgehäuseanordnungen Montagemittel (25) zur starren Montage der Achsgehäuseanordnung an dem Fahrzeugrahmen aufweist.

7. Transaxle-Vorrichtung nach Anspruch 6, dadurch gekenneichnet, daß das außenverzahnte Bauteil (103) eine erste Gruppe von geraden Innenkeilzähnen (125) und die Antriebswellenordnung (121) eine erste Gruppe von balligen Außenkeilzähnen (123) bildet, wobei die erste Keilzahngruppen die erste Universalgelenkverbindung bilden.

8. Transaxle-Vorrichtung nach Anspruch 7, dadurch gekennzeichnet, daß die Achswelle (21 oder 23) eine zweite Gruppe von geraden Innenkeilzähnen (117) und die Angriebswellenanordnung (121) eine zweite Gruppe von balligen Außenkeilzähnen (119) bildet, wobei die zweiten Keilzahngruppen die zweite Universalgelenkverbindung bilden.

9. Transaxle-Vorrichtung nach Anspruch 1, dadurch gekennzeichnet, daß die Ventilanordnung einen drehbaren Drehschieber (135) aufweist, der zusammen mit der Verteilergehäuseanordnung eine Einlaßfluidkammer (139) und eine Rückführfluidkammer (141) bildet, wobei jede der Einlaßfluidkammern in offener, relativ unbehinderter Fluidverbindung mit dem Einlaß (65) der Verteilergehäuseanordnung (63) steht und wobei jede der Rückführfluidkammern in offener, rlativ unbehinderter Fluidverbindung mit dem Auslaß (67) der Verteilergehäuseanordnung steht.

10. Transaxle-Vorrichtung nach Anspruch 9, dadurch gekennzeichnet, daß die Achsgehäuseanordnung einen Fluiddurchlaß (147) bildet, der mit jeder sich vergrößernden und verkleinernden Fluidvolumenkammern (109) in Verbindung steht, und daß der Drehychieber (135) nacheinander für eine Fluidverbindung zwischen der Einlaßfluidkammer (139) und jedem der Fluiddurchlässe sowie zwischen jedem der Fluiddurchlässe (147) und der Rückführfluidkammer (141) sorgt.

11. Transaxle-Vorrichtung nach Anspruch 10, gekennzeichnet durch eine Ventilantriebswellenanordnung (129), mittels deren eine Rotationskomponente der Bewegung des Verdrängermechanismus in eine Drehbewegung des Drehschiebers (135) um die Drehachse umsetzbar ist.

**Revendications**

1. Ensemble transmission-pont hydrostatique (11) destiné à être utilisé avec une pompe hydrostatique (13) sur un véhicule comprenant un châssis de véhicule (F), une source de puissance motrice et une paire de roues motrices (W), la pompe présentant une sortie de fluide (51) et une entrée de fluide (53), ledit ensemble transmission-pont comprenant:

a) des moyens formant carter de collecteur (63) définissant un orifice d'entrée (65) adapté pour être en communication pour la circulation du fluide avec la sortie de fluide de la pompe, et un orifice de sortie (67) adapté pour être en communication pour la circulation du fluide à l'entrée de fluide de la pompe, lesdits moyens formant carter de collecteur définissant une paire de portions réceptrices de l'ensemble essieu (87, 85) sensiblement symétriques et disposées l'une à l'opposé de l'autre et qui définissent un axe de rotation, lesdits moyens formant carter de collecteur définissant en outre des moyens formant passage d'entrée (71) en communication pour la circulation du fluide avec ledit orifice d'entrée et des moyens de passage de retour (75) en communication pour la circulation du fluide avec ledit orifice de sortie;

b) une paire d'ensembles essieu (17, 19) logés dans lesdites portions réceptrices d'ensemble essieu desdits moyens formant carter de collecteur;

c) chacun desdits ensembles essieu comprenant des moyens (91) formant un carter d'essieu fixe, qui sont montés en position fixe par rapport auxdits moyens formant carter de collecteur, un demi-arbre d'essieu (21, 23) disposé dans lesdits moyens formant carter d'essieu et monté pour tourner par rapport à ces moyens, un mécanisme à déplacement rotatif (95) actionné par une pression de fluide, des moyens (121) destinés à transmettre le mouvement rotatif de sortie dudit mécanisme à déplacement audit arbre d'essiuu, ledit mécanisme à déplacement définissant des chambres à fluide (109) pouvant se mettre en expansion et en contraction, et des moyens distributeurs (135) qui peuvent être mis en action pour établir une communication pour la circulation du fluide entre lesdits moyens formant passage d'entrée et ladite chambre à fluide en expansion, et entre ladite chambre à fluide en contraction et lesdits moyens formant passage de retour; caractérisé en ce que

d) ledit mécanisme à déplacement comprend un organe à denture intérieure (105) et un organe à denture extérieure (103) disposé excentriquement dans ledit organe à denture intérieure pour décrire un mouvement orbital et rotatif dans cet organe, et possédant un nombre de dents inférieur à celui dudit organe à denture intérieure (105), ledit mécanisme à déplacement pouvant être mis en action pour fournir un mouvement rotatif de sortie à basse vitesse et à couple élevé, et lesdits moyens (121) destinés à transmettre ledit mouvement rotatif de sortie pouvant être mis en action pour transmettre ledit mouvement rotatif de sortie à basse vitesse et couple élevé audit arbre d'essieu.

2. Ensemble transmission-pont selon la revendication 1, caractérisé en ce que ledit organe à denture intérieure (105) est constitué par une partie desdits moyens fixes formant carter d'essieu (91).

3. Ensemble transmission-pont selon la revendication 1, caractérisé en ce que ledit organe à denture intérieure (105) est monté de manière à être empêché de retourner par rapport auxdits moyens fixes (91) formant carter d'essieu, ledit organe à denture extérieure (103) décrivant un mouvement relatif orbital et rotatif dans le premier organe.

4. Ensemble transmission-pont selon la revendication 3, caractérisé en ce que lesdits moyens (121) destinés à transmettre le mouvement rotatif de sortie comprennent des moyens formant arbre de transmission qui coopèrent avec ledit organe à denture extérieure pour définir des premiers moyens formant joint universel (123, 125), et coopérant avec ledit arbre d'essieu (2 ou 23) pour définir les deuxièmes moyens formant joint universel (117, 119), pour transformer ledit mouvement orbital et rotatif dudit organe à denture extérieure en mouvement de rotation dudit arbre d'essieu.

5. Ensemble transmission-pont selon l'une quelconque des revendications 1 à 4, caractérisé en ce que ledit mécanisme à déplacement comprend un train d'engrenages du type Gerotor, ledit organe à denture intérieure compremant une couronne de Gerotor (105) possédant un nombre de dents intériures (107) égal à n+1 et ledit organe à denture extérieure comprenant une étoile de Gerotor (103) qui possède une pluralité de dents extérieures en nombre égal à N.

6. Ensemble transmission-pont selon l'une quelconque des revendications 1 à 5, caractérisé en ce que chacun desdits moyens formant carter d'essieu fixe comprend des moyens de montage (25) adaptés pour fixer rigidement lesdits moyens formant carter d'essieu au châssis du véhicule.

7. Ensemble transmission-pont selon la revendication 6, caractérisé en ce que ledit organe à denture extérieure (103) définit un premier jeu de cannelures intérieures droites (125) et lesdits moyens formant arbre de transmission (121) définissent un premier jeu de cannelures extérieures bombées (123), lesdits premiers jeux de cannelures constituant lesdits premiers moyens formant joint universel.

8. Ensemble transmission-pont selon la revendication 7, caractérisé en ce que ledit arbre d'essieu (21 ou 23) définit un deuxième jeu de cannelures intérieures droites (117) et lesdits moyens formant arbre de transmission (121) définissent un deuxième jeu de cannelures extériures bombées (119), lesdits deuxièmes jeux de cannelures constituant lesdits deuxièmes moyens formant joint universel.

9. Ensemble transmission-pont selon la revendication 1, caractérisé en ce que lesdits moyens de distribution comprennent un organe distributeur du type disque rotatif (135) qui coopère avec lesdits moyens formant carter de collecteur pour définir une chambre de fluide d'entrée (139) et une chambre de fluide de retour (141), chacune desdites chambres de fluide d'entrée étant en communication libre relativement non étranglée pour la circulation du fluide avec ledit orifice d'entrée (65) desdits moyens formant carter de collecteur (63), et chacune desdites chambres de fluide de retour étant en communication libre, relativement non étranglée, pour la circulation du fluide, avec ledit orifice de sortie (67) desdits moyens formant carter de collecteur.

10. Ensemble transmission-pont selon la revendication 9, caractérisé en ce que lesdits moyens formant carter d'essieu définissent un passage de fluide (147) qui communique avec chacune desdites chambres à volume de fluide (109) capables de se mettre en expansion ou en contraction, ledit organe distributeur du type disque rotatif (135) établissant des communications séquentielles pour la circulation du fluide entre ladite chambre de fluide d'entrée (139) et chacun desdits passages de fluide, ainsi qu'entre chacun desdits passages de fluide (137) et ladite chambre à fluide de retour (141).

11. Ensemble transmission-pont selon la revendication 10, caractérisé par des moyens formant arbre d'entraînement de distributeur (129) qui peuvent être mis en action pour transformer une composante rotative du mouvement dudit mécanisme à déplacement en un mouvement de rotation dudit organe distributeur du type disque rotatif (135) autour dudit axe de rotation.

FIG. I

FIG. 2

FIG. 3

FIG. 4

0 116 763

FIG. 5